# DEMANDE DE BREVET EUROPEEN

(11) **EP 4 776 238 A1**
(43) Date de publication de la demande: **15.07.2026**
(21) Numéro de dépôt: 25225031.1
(22) Date de dépôt: 18.12.2025
(51) Int. Cl.: G06V 10/44, G06V 10/75, G06V 10/74, G06V 10/772, G06V 20/66

(54) **DÉTECTION AUTOMATIQUE DE COMPOSANTS**

(30) Priorité: 13.01.2025 CH 262025
(71) Demandeur: Richemont International S.A., 1752 Villars-sur-Glâne (CH)
(72) Inventeur: PARENT, Alexandre, 2114 Fleurier (CH); DERETTI, Andrea, 2000 Neuchâtel (CH); HAZHAZ, Ihssan, 25300 Pontarlier (CH); CHABART, Mickaël, 2014 Fleurier (CH)
(74) Mandataire: Novagraaf International SA

(57) **Abrégé**

L'invention concerne un procédé de manipulation automatique de composants d'horlogerie ou de joaillerie, comprenant les étapes:
- capturer (S1) une image du lot de composants,
- détecter (S2) dans l'image capturée une forme d'un composant du lot,
- comparer (S3) la forme détectée à une forme préalablement validée,
- s'il n'existe pas de forme préalablement validée (S4) ou s'il n'y a aucune concordance, comparer la forme détectée à une forme non validée,
- s'il y a un nombre prédéterminé de concordance(s) entre la forme détectée et une forme non validée, ajouter la forme détectée à l'ensemble de formes validées (S6),
- s'il n'y a aucune concordance entre la forme détectée et au moins une forme non validée, ou s'il n'existe pas de forme non validée, intégrer la forme détectée à l'ensemble de formes non validées (S4).

## Description

La présente invention concerne de manière générale le domaine de l'horlogerie et de la joaillerie, plus particulièrement le domaine de la reconnaissance de composants horlogers ou joailliers, notamment leur triage, que le composant soit présenté unitairement ou en vrac.

La reconnaissance de composants est connue dans l'art antérieur.

Par exemple, le document US11068739 divulgue une méthode pour la comparaison de contours d'objets.

Toutefois, il est souhaitable d'améliorer l'efficacité des systèmes, notamment en évitant la phase fastidieuse de validation des composants détectés qui doit être reprise composant par composant, par un opérateur.

Des difficultés d'automatisation sur certaines applications sont rencontrées, à cause du nombre de références de composants très variées et/ou nombreuses.

Dans l'art antérieur, les références doivent être apprises à la main, ce qui représente environ 15 à 20 minutes par référence pour la création du fichier de vision du composant et de l'apprentissage des points de préhension avec le joystick du robot préhenseur.

La présente invention a ainsi pour but de proposer une amélioration des procédés de manipulation automatique de composants horlogers ou joailliers. Il est fait référence aux composants tels que rouage, ancre, roue d'ancre, sautoir, spiral, maillon, fermoir, lunette, carrure, cadran, aiguille, élément de bijou, de boucle d'oreille, barrette à ressort, pont, platine, pont d'ancre, ressort, pile, couronne, vis, sans être limité à ces exemples.

Dans un premier aspect, l'invention concerne un procédé de manipulation automatique de composants d'horlogerie ou de joaillerie, comprenant les étapes suivantes :
- optionnellement, faire vibrer un lot de composants, par exemple en vrac,
- capturer une image du lot de composants, le lot comprenant au moins un composant,
- détecter dans l'image capturée au moins une forme d'un composant du lot,
- optionnellement, pré comparer la forme détectée avec un facteur de forme prédéterminé ou s'assurer que la forme détectée présente un nombre de pixels supérieur à un seuil de pixels prédéterminé ou compris dans une certaine plage de tolérance prédéterminée,
- comparer la forme détectée à au moins une forme préalablement validée d'un ensemble de formes préalablement validées,
- s'il n'existe pas de forme préalablement validée ou s'il n'y a aucune concordance entre la forme détectée et au moins une forme préalablement validée de l'ensemble de formes préalablement validées ou optionnellement en tout état de cause, comparer la forme détectée à au moins une forme non validée d'un ensemble de formes non validées,
- s'il y a un nombre prédéterminé de concordance(s) entre la forme détectée et au moins une forme non validée de l'ensemble de formes non validées, ajouter la forme détectée à l'ensemble de formes validées,
- s'il n'y a aucune concordance entre la forme détectée et au moins une forme non validée de l'ensemble de formes non validées, ou s'il n'existe pas de forme non validée, intégrer la forme détectée à l'ensemble de formes non validées,
- s'il y a une concordance entre la forme détectée et au moins une forme préalablement validée de l'ensemble de formes préalablement validées, détecter un point de préhension sur la forme détectée.

Ceci permet de proposer une amélioration des procédés de manipulation automatique de composants horlogers ou joailliers, sans la nécessité de recours à l'intelligence artificielle ni à la création par un opérateur de chaque forme validée. En d'autres termes, il est possible de prévoir que dans tous les cas, la comparaison est réalisée avec les deux dossiers, validé et en cours de validation. Si l'on trouve une concordance avec une pièce validée et avec une pièce non validée, c'est la correspondance la plus proche qui est retenue. Cela permet de gérer des cas avec des défauts, par exemple avec une roue. La version de base avec toutes les dents est apprise, une autre apparait avec trois dents manquantes, elle est trop différente, on va donc créer une référence non validée. Une troisième roue arrive, il lui manque cette fois deux dents, elle est reconnue par les deux références (validée et non validée), mais étant plus proche de la référence non validée, elle sera appairée avec celle-ci.

Il est possible de répéter chacune des étapes, ensemble ou séparément, autant que nécessaire ou utile.

Le lot de pièces ou de composants comprend au moins une pièce ou un composant, de préférence une pluralité de pièces ou de composants, comme par exemple vingt, cinquante, cent, ou plus. En d'autres termes, le procédé pourrait être utilisable autant sur du vrac que des composants unitaires. Le lot concerne une pièce (ou un composant) seul ou plusieurs pièces (composants) qui peuvent éventuellement se chevaucher dans le cas du vrac.

Un exemple d'application concrète concerne le fait de passer d'un conditionnement par lot de cent à des conditionnements par lot de vingt. Un autre exemple d'application concrète concerne le fait de constituer des kits avec un nombre prédéterminé de composants de chaque type sur un même plateau ou dans un même conditionnement (par exemple : un kit de réparation avec 2 vis, un pont et un mobile de rouage).

L'invention peut aussi être définie selon les caractéristiques suivantes, prises individuellement ou en combinaison.

Avantageusement, le procédé comprend en outre une étape de pré-comparaison.

II peut s'agir de la comparaison de dimensions caractéristiques des deux images (taille de la surface, excentricité du point le point éloigné,...). Il peut s'agir de faire une première comparaison très simple ne demandant pas trop de puissance de calcul pour limiter le temps de cycle en ne faisant pas les étapes suivantes si les deux images sont trop peu similaires. Si la pré-comparaison est validée, les étapes du procédé s'enchainent.

Si cette comparaison de surface est validée à l'étape de pré comparaison, nous allons comparer les formes ce qui prend plus de ressources (identifier les positions des points de tous les contours, essayer d'aligner les deux ensembles de points, relever les zones différentes, etc).

Avantageusement, le procédé comprend l'étape suivante :
- incrémenter un compteur à chaque fois qu'il y a une concordance entre la forme détectée et l'au moins une forme non validée de l'ensemble de formes non validées.

Ceci permet de s'assurer de la consistance de la forme détectée afin de s'assurer qu'elle peut bien passer en forme validée après un certain nombre d'occurrence détectée.

Il est possible de prévoir un compteur dédié à au moins certaines formes non validées. Il peut donc y avoir une pluralité de compteurs correspondants à chaque forme non validée.

Avantageusement, le procédé comprend l'étape suivante :
- lorsque le compteur arrive au nombre prédéterminé de concordance(s) entre la forme détectée et l'au moins une forme non validée de l'ensemble de formes non validées, ajouter la forme détectée à l'ensemble de formes validées.

Avantageusement, le procédé comprend l'étape suivante :
- envoyer à un robot préhenseur des coordonnées du point de préhension détecté.

Avantageusement, le procédé comprend l'étape suivante :
- prendre le composant au niveau du point de préhension et le déposer dans un bac, de préférence alvéolé, associé à la forme préalablement validée.

Il est possible de déposer soit toutes les mêmes pièces (ou composants) dans un seul bac (application de tri), soit passer dans des conditionnements unitaires (application de reconditionnement) ou en kits.

Avantageusement, le procédé comprend l'étape suivante :
- détecter une surface de composant, une position de composant et/ou une dimension de contour extérieur ou une dimension de contour intérieur ou une excentricité du point le plus éloigné.

Avantageusement, l'étape de comparaison consiste à identifier des similitudes géométriques et/ou des différences géométriques entre les formes comparées. Avantageusement, la comparaison est faite en deux étapes principales, un alignement puis une phase d'identification des différences. L'alignement comprend de préférence deux étapes, une première phase de translation pour faire s'accorder les barycentres des deux images, puis une phase de rotation pour faire s'accorder au mieux les contours. La deuxième phase d'identification des différences va permettre de superposer les deux images alignées puis mettre en exergue les pixels différents. Si les pixels représentent plus de 10% de la surface de la pièce, elle est considérée comme différente. Il peut s'agir également d'une reconnaissance de filtrage par motif (« pattern matching » en anglais) connue de l'art antérieur.

Avantageusement, la concordance est le résultat de l'étape de comparaison dans laquelle il n'existe aucune différence géométrique, ou optionnellement dans laquelle il existe un nombre de similitudes supérieur à un seuil prédéterminé.

Avantageusement, l'étape de détection du point de préhension comprend l'étape de détection d'une surface pleine ou sans orifice, de préférence supérieure à une surface prédéterminée ou de préférence éloignée d'un orifice, d'un contour ou d'un bord du composant.

Avantageusement, le procédé comprend l'étape suivante :
- séparer ou segmenter, dans l'image capturée, au moins une forme parmi une pluralité de formes, et optionnellement la pluralité de formes comprend au moins deux formes qui se chevauchent. En d'autres termes, sur l'image capturée par la caméra, on peut distinguer plusieurs composants/formes distinct(e)s, voir des composants qui se chevauchent. L'étape consiste à isoler, identifier ou sélectionner une forme vis-à-vis des autres. Autrement dit, on sélectionne les différents contours fermés présents dans l'image.

Avantageusement, initialement, l'ensemble de formes préalablement validées et/ou l'ensemble de formes non validées est vide.

On entend par initialement, le moment du déploiement de la machine; mais d'une production à l'autre, les références peuvent être conservées.

Avantageusement, le procédé comprend l'étape suivante :
- comparer la forme détectée à au moins une forme non validée d'un ensemble de formes non validées.

De préférence, à chaque fois, c'est-à-dire pour chaque forme détectée sous réserve de l'étape de pré comparaison, la pièce (ou le composant) est comparée avec les formes validées et non validées. Cela permet de trier des pièces (ou des composants) avec des ressemblances.

Si la pièce (ou composant) est plus proche d'une référence non validée que d'une pièce (ou composant) validée (et si la proximité est suffisante), on incrémente le compteur de la référence de pièce non validée qui selon la valeur du compteur peut devenir validée ou rester non validée.

Il est possible de prévoir une étape de comparaison qui est une succession de plusieurs fonctions permettant de comparer deux images et de ressortir un taux de correspondance.

Il est possible de prévoir une étape de manipulation qui peut consister à identifier des coordonnées d'un point de préhension, un bon candidat pour cela, et/ou une distance par rapport à un contour interne ou externe.

En d'autres termes, l'invention concerne un procédé de détection automatique pour dévraquer, (prendre ou manipuler) ou saisir des pièces d'horlogerie ou de joaillerie, le procédé comprenant les étapes suivantes :
- a) optionnellement, faire vibrer un lot de pièces,
- b) prendre une image du lot de pièces,
- c) détecter une forme d'une pièce du lot,
- d) comparer la forme de la pièce à une forme préalablement validée d'un ensemble de formes préalablement validées,
- e) s'il y a une concordance avec la forme préalablement validée et s'il n'y a pas de meilleur résultat avec une forme non validée, détecter un point de préhension sur la pièce,
- f) (optionnellement s'il n'y a pas la concordance avec la forme préalablement validée ou s'il n'existe pas de forme préalablement validée), comparer la forme de la pièce à la forme non validée d'un ensemble de formes non validées,
- g) s'il y a une concordance d'assimilation avec la forme non validée, assimiler la forme non validée en forme validée,
- h) s'il n'y a pas la concordance d'assimilation avec la forme non validée ou s'il n'existe pas de forme non validée, intégrer la forme de la pièce à l'ensemble de formes non validées.

Notons qu'il est possible d'itérer les étapes plusieurs fois avec de préférence une étape de vibration entre chaque itération. Dans le cas des pièces en vrac, il est avantageux d'avoir une vibration entre les prises d'images pour éviter que des pièces superposées soient considérées comme validées.

Un deuxième aspect de l'invention concerne un robot, en particulier un robot préhenseur, agencé pour mettre en œuvre le procédé selon l'une des revendications précédentes.

Ceci permet de prévoir un robot ou une machine comprenant le robot, avec tous les avantages mentionnés.

Avantageusement, le robot comprend :
- un bras robot, et
- une caméra ou un capteur optique. Notons que la caméra ou le capteur optique peut être embarqué sur le robot ou déporté.

Il est possible de prévoir également un système d'axes poly articulés (peut être un robot 3 axes, un SCARA, un bras, ...), soit globalement tout système mécanique capable d'atteindre une consigne de position.

La caméra peut être hors du robot, mais il est possible d'utiliser celle du robot si besoin.

Le robot peut comprendre en outre une mémoire, un processeur, une unité de commande ou une unité de contrôle, une interface de commande, une interface graphique, une interface utilisateur, et/ou une interface dite HMI.

Avantageusement, le robot comprend en outre un système de dévracage ayant de préférence une trémie et/ou un bac vibrant et/ou un éclairage, en particulier un rétro-éclairage.

Ceci est optionnel, en particulier si l'on est intéressé seulement par le reconditionnement.

Un troisième aspect de l'invention concerne un composant d'horlogerie ou de joaillerie détecté avec le procédé selon le premier aspect.

Un quatrième aspect concerne un dispositif de dévracage par exemple par une vibration du support de pièces, agencé pour mettre en œuvre le procédé selon le premier aspect.

D'autres caractéristiques et avantages de la présente invention apparaîtront plus clairement à la lecture de la description détaillée qui suit, de modes de réalisation de l'invention donnés à titre d'exemple nullement limitatif et illustrés par les dessins annexés, dans lesquels :
la figure 1 représente des étapes du procédé de manipulation automatique selon la présente invention,
la figure 2 représente une image avec des composants horlogers ou joailliers disposés en vrac, selon la présente invention,
la figure 3 représente une image avec un composant donné, avec détection des contours intérieurs et extérieurs, selon la présente invention,
la figure 4 représente un premier exemple de cycle (ou série d'étapes) du procédé de manipulation automatique selon la présente invention,
la figure 5 représente un deuxième exemple de cycle du procédé de manipulation automatique selon la présente invention,
la figure 6 représente un troisième exemple de cycle du procédé de manipulation automatique selon la présente invention, pour la détection de pièces hors tolérances.

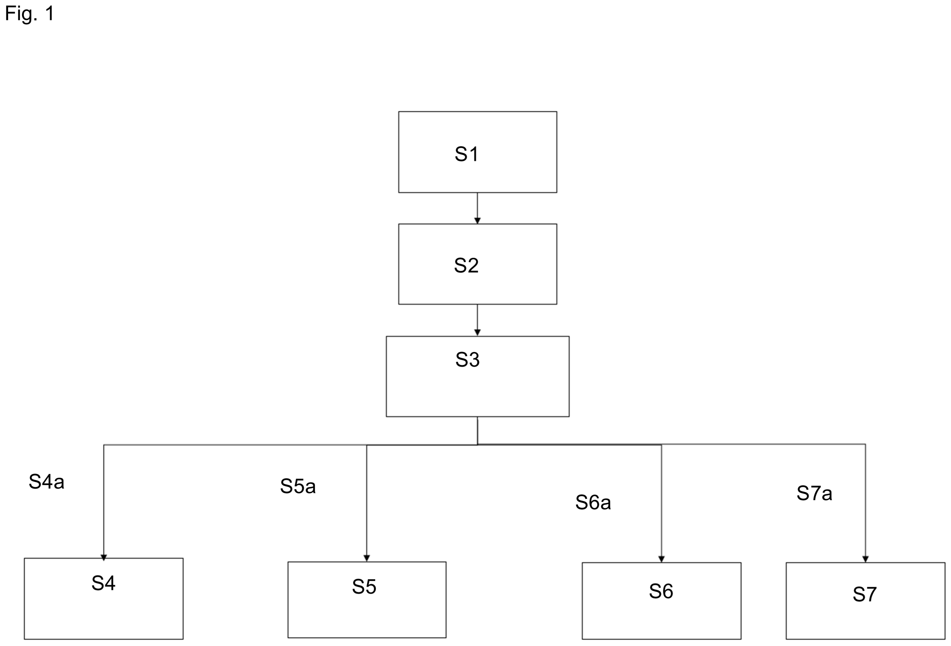

La figure 1 représente des étapes du procédé de manipulation automatique selon la présente invention.

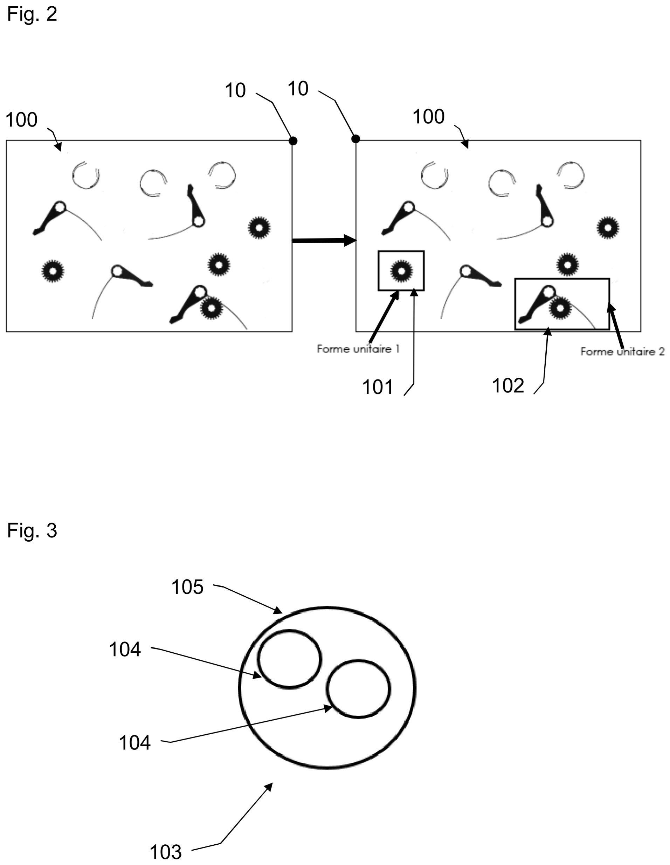

Le procédé de manipulation automatique de composants d'horlogerie ou de joaillerie selon la présente invention comprend les étapes suivantes :
- optionnellement, faire vibrer un lot de composants 100, par exemple en vrac,
- capturer une image (étape S1) du lot de composants 100, le lot 100 comprenant au moins un composant 101 (visible à la figure 2),
- détecter dans l'image capturée (étape S2) au moins une forme d'un composant 101 du lot 100,
- optionnellement, pré comparer la forme détectée avec un facteur de forme prédéterminé ou s'assurer que la forme détectée présente un nombre de pixels supérieur à un seuil de pixels prédéterminé,
- comparer (ou classifier, étape S3) la forme détectée à au moins une forme préalablement validée d'un ensemble de formes préalablement validées,
- s'il n'existe pas de forme préalablement validée (étape S4) ou s'il n'y a aucune concordance entre la forme détectée et au moins une forme préalablement validée de l'ensemble de formes préalablement validées, comparer la forme détectée à au moins une forme non validée d'un ensemble de formes non validées,
- s'il y a un nombre prédéterminé de concordance(s) entre la forme détectée et au moins une forme non validée de l'ensemble de formes non validées, ajouter la forme détectée à l'ensemble de formes validées (étape S6),
- s'il n'y a aucune concordance entre la forme détectée et au moins une forme non validée de l'ensemble de formes non validées, ou s'il n'existe pas de forme non validée, intégrer la forme détectée à l'ensemble de formes non validées (voir étape S4),
- s'il y a une concordance entre la forme détectée et au moins une forme préalablement validée de l'ensemble de formes préalablement validées, détecter un point de préhension sur la forme détectée (étape S7).

Il est possible d'incrémenter (étape S5) un compteur à chaque fois qu'il y a une concordance entre la forme détectée et au moins une forme non validée de l'ensemble de formes non validées.

Lorsque le compteur arrive au nombre prédéterminé de concordance(s) entre la forme détectée et l'au moins une forme non validée de l'ensemble de formes non validées, on peut ajouter la forme détectée à l'ensemble de formes validées (étape S6).

Grâce à la présente invention, il est possible de gérer automatiquement le « choix et placement » (« pick and place » en anglais) de composants sans avoir besoin de les référencer au préalable. Ceci permet de réaliser du tri de vrac, du reconditionnement, de la préhension, du chargement de machine, sans être limité à ces exemples. Les variantes en fonction des cas d'applications seront détaillées ci-après.

Il est possible d'avoir les principales fonctions intégrées suivantes :
- gestion des prises d'images et de la séparation de pièces (dit « dévracage »),
- classification, reconnaissance et/ou création automatique d'une référence de composant,
- gestion du magasin d'outils et détermination de l'outil optimal,
- détection du point de préhension optimal,
- manipulation du composant et gestion de la dépose.

La partie classification et reconnaissance automatique sera en particulier détaillée dans la présente description.

On entend par forme unitaire le résultat de l'isolation de contours à partir d'une image comprenant plusieurs pièces, et qui comporte les informations sur les contours intérieurs et extérieurs, la taille de la surface et la taille du rectangle englobant. Le résultat est de préférence en 2D.

On entend par forme 3D unitaire une forme unitaire mentionné ci-avant, mais au lieu que le résultat soit en 2D, il s'agit d'un nuage de points dans un espace 3D.

On entend par référence connue ou sûre (ou forme préalablement validée) une référence enregistrée dans le système comme certaine (sans doute qu'il s'agisse de pièces superposées, de déchets, etc), prête à être prise par le robot.

On entend par référence possible (ou forme non validée) une référence enregistrée dans le système comme incertaine (pouvant encore être des pièces superposées, des déchets ou autre). Cette référence ne va pas encore être prise par le robot.

Notons qu'il est possible de prévoir de mettre en attente dans une zone de stockage prévue à cet effet des pièces validées ou non validées. En outre, il est possible de prévoir une application de « choix et placement » (« pick and place » en anglais) avec séparation des pièces KO par exemple, mais dans tous les cas il est préférable que la pièce soit validée pour être prise (même si la validation est avec un compteur d'une occurrence).

On entend par référence inconnue une référence encore absente du système (peut-être une pièce, une superposition de pièces, des déchets, etc).

On entend par compteur de validation un nombre d'itérations que nous souhaitons atteindre pour valider qu'une référence possible (i.e. forme non validée) est bonne et donc la classer parmi les références sûres (i.e. formes validées).

On entend par seuil de correspondance une valeur de correspondance entre une image de référence et celle est cours d'analyse, ce seuil est généralement en pourcentage (99%-100% pour deux pièces identiques, inférieur pour des composants différents).

On entend par procédé ou processus de comparaison une succession de plusieurs fonctions permettant de comparer deux images et de ressortir un taux de correspondance. Les étapes de la comparaison sont par exemple les suivantes :
- Pré-comparaison : comparaison de dimensions caractéristiques des deux images (taille de la surface, excentricité du point le point éloigné,...). L'idée est de faire une première comparaison très simple ne demandant pas trop de puissance de calcul pour limiter le temps de cycle en ne faisant pas les étapes suivantes si les deux images sont trop peu similaires.
   - Si la pré-comparaison est validée, les étapes du procédé s'enchainent.

Ceci étant dit, une des fonctions du procédé est de traiter des images 2D pour en détecter des formes qui se répètent et ainsi pouvoir les classer. À noter que des images 3D pourront également être utilisées, cette variante sera détaillée ci-après. Un des intérêts principaux de la présente invention est qu'aucune intelligence artificielle ni base de données préalable n'est nécessaire au fonctionnement du procédé, ni aucune intervention particulière d'un opérateur pour l'ajout de nouvelles références (si ce n'est le lancement du procédé). En comparaison, un apprentissage d'une référence peut aller de 5 à 30 minutes en moyenne selon les systèmes de l'art antérieur.

Le procédé selon l'invention est ainsi composé de préférence :
- d'une première phase de traitement d'image,
- d'une phase de comparaison, et
- d'une phase de classement / enregistrement.

La figure 2 représente une image 10 avec des composants horlogers ou joailliers 100 disposés en vrac, selon la présente invention.

L'entrée du procédé peut donc être une image 2D ou 3D (capturée par exemple par une ou plusieurs caméras 14MPx, adaptable selon l'application visée).

Sur cette image 10 peuvent se trouver plusieurs références 100 dont certaines qui se chevauchent 102.

Dans cette étape, les formes de l'image 10 seront contournées (i.e. des contours des composants 100 seront détectés et/ou déterminés), séparées et les défauts supprimés (parties d'autres formes, poussières, formes trop petites, etc).

Nous obtenons à la fin de cette étape plusieurs images de formes unitaires 101 (qui sont donc composées des contours intérieurs et extérieurs, taille de la surface et taille du rectangle englobant).

Pour l'étape de comparaison, il est possible de commencer à partir de formes 2D unitaires noires sur fond blanc.

Pour réaliser les comparaisons, il est possible d'utiliser deux dossiers d'enregistrement, un premier appelé « Références connues » (ou ensemble de formes préalablement validées comprenant zéro, une ou plusieurs formes préalablement validées) et un second « Références possibles » (ensemble de formes non validées comprenant zéro, une ou plusieurs formes non validées) où seront enregistrées les formes unitaires traitées précédemment.

Notons qu'ici le terme préalablement validé fait référence ici à une forme validée par le procédé lui-même, dans un cycle ou une action précédente. Alternativement ou en combinaison, il est possible de prévoir une validation préalable par un opérateur ou une intelligence artificielle ou un autre système, ce qui permet pouvoir absorber toute connaissance préalable pour ajouter des connaissances au corpus de départ.

Le but va être de détecter des répétitions de formes afin de garantir qu'il s'agisse bien d'une référence (d'un composant ou d'une pièce) et non pas d'une superposition de plusieurs composants ou pièces.

Une fois la production terminée, en fonction de la taille du dispositif de stockage, il peut être décidé de supprimer le contenu du dossier « Références possibles », et idem pour le dossier « Références connues ».

La figure 3 représente une image avec un composant 103, avec détection des contours intérieurs 104 et extérieurs 105 du composant 103, selon la présente invention.

On entend par contour(s) d'une pièce ou d'un composant les bords à l'intérieur et/ou à l'extérieur.

Ainsi, en références à toutes les figures, le procédé peut comprendre les étapes suivantes.
- commencer par sélectionner l'une des formes unitaires,
- calculer la surface de la forme, la position et dimension de ses contours extérieurs et/ou intérieurs,
- comparer aux formes présentent dans le dossier « Références connues », puis à celle du dossier « Références possibles ». Si plusieurs correspondances apparaissent, ressortir celle avec le meilleur résultat.

Si la production vient de commencer et que les deux dossiers sont vides, l'enregistrement sera donc fait automatiquement dans le dossier « références possibles ». Optionnellement ou alternativement, il est possible de pouvoir recharger les informations sur l'article cible de l'historique ou d'une autre source d'information pour ne pas partir avec un dossier vide dans la référence connue.

Pour gagner du temps de traitement lors des phases de comparaison, on peut commencer par comparer la surface de la pièce (ok si 0.85*surface < x < 1.15*surface). Cette comparaison est moins chronophage que la superposition de contours et surfaces qui vient dans un second temps si le premier critère est validé.

La comparaison avec les deux dossiers à chaque fois permet de traiter certains cas spécifiques de pièces KO. Dans le cas où une pièce KO apparait, elle sera alors stockée dans le dossier références possibles. Si une autre pièce entre le OK et le KO apparait, la comparaison avec les deux dossiers permet de la trier dans les pièces KO (et donc à contrôler) si elle est plus proche de la pièce KO plutôt que laisser passer une pièce défectueuse.

Dans le cas où une correspondance apparait, il y a deux possibilités.

Soit il s'agit d'une référence connue, alors on va calculer un point de prise en recherchant le point le plus éloigné des contours (intérieurs et/ou extérieurs).

Soit la correspondance apparait avec une référence possible.

Si une concordance apparait, la référence ira donc incrémenter un compteur de validation lié à la forme enregistrée dans ce dossier.

Ce compteur peut être modifié selon l'application pour +/de certitude dans les « Références connues ».

Si le compteur obtient le nombre demandé, la forme recherchée pourra donc passer dans le dossier « Références connues » (dans l'étape suivante).

Si aucune correspondance n'apparait, la forme est ajoutée au dossier « références possibles » avec un compteur de validation à 1.

À ce stade, on est alors capable de savoir si la forme est :
- une référence connue dont le point de préhension va alors être calculé et le numéro de reconnaissance communiqué au moyen de préhension,
- une référence possible venant d'être validée (compteur de validation atteint), auquel cas son image sera transférée vers le dossier « Références connues »,
- une référence en cours de validation, (concordance avec une forme du dossier « Référence possible », mais avec un compteur de validation non atteint), on passera donc simplement à la forme suivante détectée,
- une référence complètement inconnue, alors son image sera ajoutée au dossier « Références possibles » à la phase suivante.

Il est possible de prévoir une phase de classement / enregistrement.

Cette phase consistera principalement à l'enregistrement des références inconnues dans le dossier « Références possibles » ou au transfert entre les deux dossiers en fonction des résultats de la phase précédente.

Afin de limiter la quantité de données à sauvegarder et avec lesquels comparer, il est possible de prévoir que certaines références possibles seront supprimées à partir d'un certain nombre de détections sans correspondance.

Pour les applications où les pièces sont en vrac (i.e. par exemple pas en conditionnement alvéolé unitaire), les pièces ou les composants peuvent se chevaucher. Pour éviter que des pièces chevauchées soient reconnues plusieurs fois d'affilée et deviennent donc des « Références connues », il est possible de prévoir l'utilisation d'une plateforme vibrante est réalisée pour déplacer les pièces. Il est alors extrêmement peu probable que des pièces se superposent exactement de la même manière. En cas de soucis, il suffit de régler à la hausse le seuil de correspondance (usuellement le seuil de correspondance est réglé sur 10% de différences maximum, mais possible diminution jusqu'à 1% au besoin) et/ou le nombre du compteur (usuellement entre 3 et 10) de validation nécessaire.

Il est possible de prévoir une version en 3D en adaptant la version 2D. Les variations seront notamment par exemple:
- le traitement de nuage(s) de points dans la phase de traitement d'image au lieu d'image 2D et utilisation de reconstruction 3D à base de nuage(s) de points pour obtenir une forme 3D unitaire,
   - la comparaison de forme unitaire 3D au lieu de forme 2D dans la phase de comparaison.

D'autres adaptations seront à prévoir pour le calcul du point de prise ou du point de dépose par exemple.

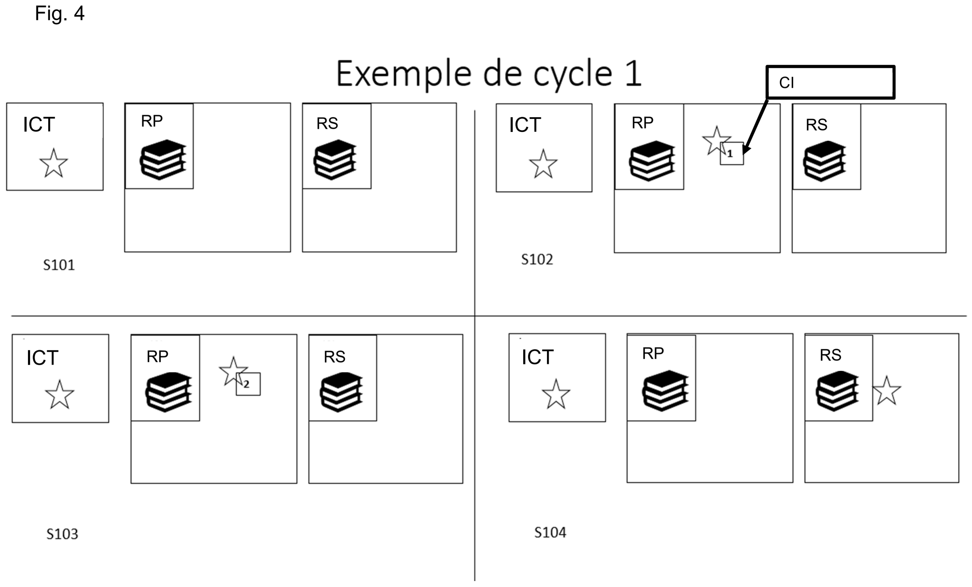

La figure 4 représente un premier exemple de cycle du procédé de manipulation automatique selon la présente invention.

En début de production, étape S101, en lien avec une première pièce (représentée schématiquement par une étoile), les deux dossiers références sont vides, la comparaison ne se fait donc avec rien, la première pièce va forcément dans le dossier références possibles.

En traitant une deuxième pièce (représentée schématiquement par une étoile), étape S102, la nouvelle image ou une autre partie de l'image précédente en lien avec une deuxième pièce est comparée avec celle des deux dossiers (ici seulement celle enregistrée précédemment). La correspondance est faite avec celle du dossier références possibles, le compteur est incrémenté de 1.

En traitant une troisième pièce (représentée schématiquement par une étoile), étape S103, la nouvelle image ou une autre partie de l'image précédente en lien avec une troisième pièce est comparée avec celle des deux dossiers (ici seulement celles enregistrée précédemment). La correspondance est faite avec celle du dossier référence possible, le compteur est incrémenté de 1.

Pour cet exemple, la valeur maximum du compteur est de 3 qui est également le seuil prédéterminé (de validation ou de confirmation), la pièce est alors transférée vers les références sûres.

En traitant une quatrième pièce (représentée schématiquement par une étoile), étape S104, la nouvelle image ou une autre partie de l'image précédente en lien avec une quatrième pièce est comparée avec celle des deux dossiers (ici seulement celles enregistrée précédemment). La correspondance est faite avec celle du dossier références sûres, la phase de recherche du point de prise commence alors.

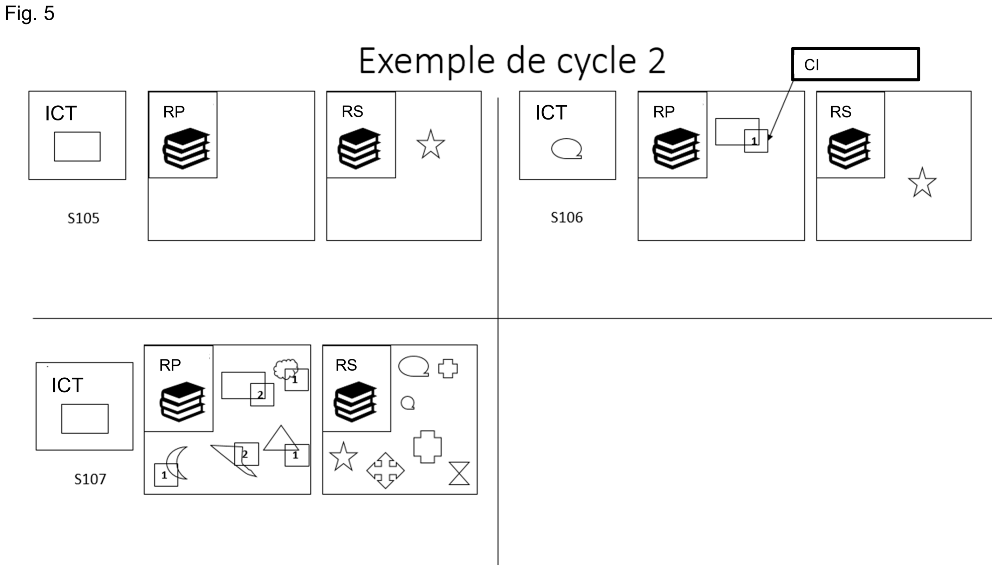

La figure 5 représente un deuxième exemple de cycle du procédé de manipulation automatique selon la présente invention.

En traitant une cinquième pièce (ici schématiquement un rectangle), étape S105, une nouvelle référence apparait, elle ne correspond pas à celle apprise précédemment, elle est donc ajoutée au dossier références possibles.

En traitant une sixième pièce (ici une bulle schématiquement), étape S106, une nouvelle référence apparait, elle ne correspond pas à celles apprises précédemment, elle est donc ajoutée au dossier références possibles.

La production a avancée, une étape S107 est mise en œuvre et plusieurs références ont été créés (références sûres) et d'autres sont en cours de validation (références possibles). Ici l'image en cours de traitement va être reconnue dans les références possibles. Son compteur va incrémenter à 3 (exemple de nombre prédéterminé de concordance), elle va donc être transférée dans les références sûres.

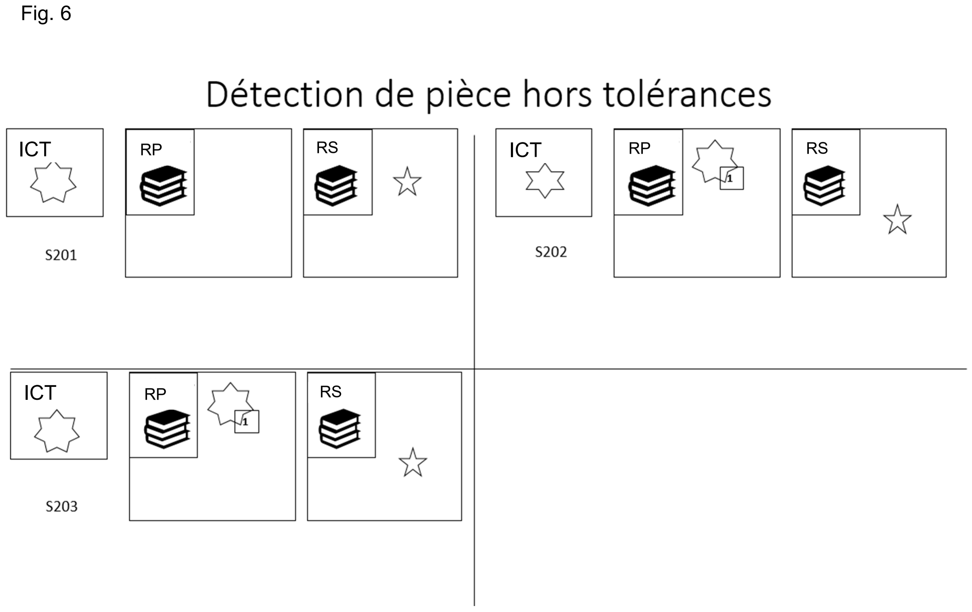

La figure 6 représente un troisième exemple de cycle du procédé de manipulation automatique selon la présente invention, pour la détection de pièce hors tolérance.

En conditions initiales, une pièce OK a déjà été enregistrée dans les références sûres. Une variante KO (très éloignées de la pièce témoin) est imagée. Il n'y a donc pas de correspondance avec la pièce témoin, elle est alors enregistrée dans les références possibles (étape S201).

Dans un cas de pièce intermédiaire, les deux dossiers contiennent un exemple de pièce OK et un exemple de KO. Ici la pièce imagée est entre les deux précédemment enregistrées en termes de tolérance.

Pour assurer une détection au mieux des OK/KO, la comparaison est faite avec les deux dossiers et c'est le meilleur résultat de correspondance qui ressortira (étape S202).

Dans un cas tri de KO, la pièce KO a déjà été imagée une fois et est donc présente dans le dossier références possibles. Après quelques acquisitions elle est à nouveau imagée. Elle va alors faire incrémenter le compteur dans le dossier références possibles. Après plusieurs prises d'image elle pourra alors être saisie et triée hors des pièces OK (étape S203).

Notons qu'il est possible d'expliquer l'invention en d'autres termes ci-après.

**Table 1**

| Etapes | Description |
|---|---|
| ST 1 | Vibration et prise image |
| ST 2 | Séparation des différentes formes |
| ST 3 | Comparaison aux formes en mémoire fixe (références connues) |
| | • Si OK -> étape 6 |
| | • Si KO -> étape 4 |
| ST 4 | Comparaison aux formes présentes en mémoire-tampon (références possibles) |
| | • Si KO, ajout de la forme à la mémoire-tampon, puis étape 1 ou 2 en fonction du nombre de formes restantes |
| | • si OK, passage en étape 5 |
| ST 5 | La forme ayant été vue à plusieurs reprises (nombre d'images identiques peut être choisie, équilibre entre rapidité et robustesse), elle est déplacée en mémoire fixe (références connues) |
| ST 6 | Détection du point de préhension |
| ST 7 | Envoi des coordonnées au robot et préhension et/ou du nom de la pièce (simple numéro) |
| ST 8 | Dépose de la pièce dans le bac ayant le nom associé |

Le système est composé d'un bras robot (ou un manipulateur) et/ou d'un système de dévracage (trémie, bac vibrant et/ou rétroéclairage) et d'un appareil de capture d'images telle qu'une caméra.

Le système peut avoir un stockage fixe pour les références validées et un stockage «tampon» pour les références en attente de validation.

Plusieurs étapes permettent déjà de reconnaitre des formes en vrac. Le procédé permet de traiter plusieurs références sur une seule image (pas de limite au nombre de référence en même temps) et sans aucune donnée préalable (3D des pièces, image unitaire, etc).

L'une des difficultés liées au vrac est de faire la différence entre une pièce seule et plusieurs pièces qui se chevauchent.

Pour se faire, le procédé de la présente invention va commencer par prendre une image (étape ST 1) et séparer les différentes formes détectées (étape ST 2). Une fois qu'une forme est détectée, elle est comparée aux formes déjà connues de la mémoire fixe (ST 3). Si elle n'est pas connue, elle sera comparée à celles de la mémoire-tampon (ST4) et ajoutée à cette dernière si aucune image ne correspond (ST 4-KO) (nous appellerons donc ces formes détectées «formes tampon»).

Si une forme tampon est trouvée à plusieurs reprises, cela permettra de confirmer qu'il s'agit bien d'une référence et non de pièces qui se chevauchent. Elle sera donc transférée dans la mémoire fixe (ST 5) et un point de prise sera déterminé à l'aide d'une autre étape (ST 6).

A l'étape ST 7, on envoie des coordonnées au robot et/ou un nom de pièce (qui peut être un simple numéro) afin de saisir la pièce détectée.

A l'étape ST 8, on dépose la pièce saisie dans le bac ayant le nom associé.

On comprendra que diverses modifications et/ou améliorations évidentes pour l'homme du métier peuvent être apportées aux différents modes de réalisation de l'invention décrits dans la présente description.

Notons enfin qu'il est possible de combiner les modes de réalisations autant que possible ou nécessaire.

### Application industrielle

Dans l'application du reconditionnement, il est observé dans les ateliers de manufactures, que chaque jour, de nombreuses pièces sont à transférer de vracs vers des conditionnements ou d'un conditionnement vers un autre. Il est possible de mettre en œuvre la présente invention pour qu'un opérateur vienne avec ses pièces à reconditionner, qu'elles soient automatiquement apprises et manipulées par un actionneur puis placées dans le nouveau conditionnement. Il est souhaitable d'avoir un moyen d'apprendre les conditionnements en automatique, et plusieurs options sont imaginables (scan 3D, vision 2D avec des gommettes dans les alvéoles, indication des emplacements sur un IHM,...).

Dans l'application du « choix et placement » simple (« pick and place » en anglais), le but va être de réaliser la préhension de composants pour le déplacer dans une zone sans besoin de précision particulier, ça peut être un déplacement sur un convoyeur, un établi horloger, un bac, ...

L'intérêt de la présente invention serait alors de pouvoir manipuler une large gamme de pièce sans avoir à s'occuper de l'apprentissage puis de la déposer à un point simple pré-appris pour toutes les pièces.

Dans l'application du « choix et placement » complexe (« pick and place » en anglais), le point de dépose est lié à la pièce et demande une grande précision (chargement de posages ajustés, chargement de bouclards,...). L'intégration de la présente invention sur cette application est également possible, de préférence sous condition d'un apprentissage du point de dépose ou d'ajout d'une technologie permettant d'apprendre automatiquement ce dernier.

Enfin, il est possible de prévoir un mode de réalisation avec une connaissance préalable importée d'un lot de production précédent sur la même machine ou d'une base de connaissance humaine ou tirée des plans.

Liste de référence
S1 : Prise d'image ; S2 : Segmentation ; S3 : Classification par rapport aux dossiers références ; S4 : Enregistrement en référence possible ; S4a : Si référence complètement inconnue ; S5 : Incrément du compteur ; S5a : Si correspondance avec référence possible et compteur de correspondance inférieur à X ; S6 : Enregistrement en référence sûr ; S6a : Si correspondance avec référence possible et compteur de correspondance supérieur à X ; S7 : Calcul du point de prise ; S7a : Si correspondance avec référence sûr ; ICT : Image en cours de traitement ; RP : Références possibles ; RS : Références sûres ; CI : Compteur d'itération

## Revendications

1. Procédé de manipulation automatique de composants d'horlogerie ou de joaillerie, comprenant les étapes suivantes :
- optionnellement, faire vibrer un lot de composants, par exemple en vrac,
- capturer (S1) une image (10) du lot de composants (100), le lot (100) comprenant au moins un composant (101),
- détecter (S2) dans l'image capturée au moins une forme d'un composant (101) du lot (100),
- optionnellement, pré comparer la forme détectée avec un facteur de forme prédéterminé ou s'assurer que la forme détectée présente un nombre de pixels supérieur à un seuil de pixels prédéterminé ou compris dans une certaine plage de tolérance prédéterminée,
- comparer (S3) la forme détectée à au moins une forme préalablement validée d'un ensemble de formes préalablement validées,
- s'il n'existe pas de forme préalablement validée (S4) ou s'il n'y a aucune concordance entre la forme détectée et au moins une forme préalablement validée de l'ensemble de formes préalablement validées ou optionnellement en tout état de cause, comparer la forme détectée à au moins une forme non validée d'un ensemble de formes non validées,
- s'il y a un nombre prédéterminé de concordance(s) entre la forme détectée et au moins une forme non validée de l'ensemble de formes non validées, ajouter la forme détectée à l'ensemble de formes validées (S6),
- s'il n'y a aucune concordance entre la forme détectée et au moins une forme non validée de l'ensemble de formes non validées, ou s'il n'existe pas de forme non validée, intégrer la forme détectée à l'ensemble de formes non validées (S4),
- s'il y a une concordance entre la forme détectée et au moins une forme préalablement validée de l'ensemble de formes préalablement validées, détecter un point de préhension sur la forme détectée (S7).

2. Procédé selon la revendication précédente, comprenant l'étape suivante :
- incrémenter (S5) un compteur à chaque fois qu'il y a une concordance entre la forme détectée et l'au moins une forme non validée de l'ensemble de formes non validées.

3. Procédé selon la revendication précédente, comprenant l'étape suivante :
- lorsque le compteur arrive au nombre prédéterminé de concordance(s) entre la forme détectée et l'au moins une forme non validée de l'ensemble de formes non validées, ajouter la forme détectée à l'ensemble de formes validées (S6).

4. Procédé selon l'une des revendications précédentes, comprenant l'étape suivante :
- envoyer à un robot préhenseur des coordonnées du point de préhension détecté.

5. Procédé selon l'une des revendications précédentes, comprenant l'étape suivante :
- prendre le composant au niveau du point de préhension et le déposer dans un bac, de préférence alvéolé, associé à la forme préalablement validée.

6. Procédé selon l'une des revendications précédentes, comprenant l'étape suivante :
- détecter une surface de composant, une position de composant et/ou une dimension de contour extérieur ou une dimension de contour intérieur ou une excentricité du point le plus éloigné.

7. Procédé selon l'une des revendications précédentes, dans lequel l'étape de comparaison consiste à identifier des similitudes géométriques et/ou des différences géométriques entre les formes comparées.

8. Procédé selon la revendication précédente, dans lequel la concordance est le résultat de l'étape de comparaison dans laquelle il n'existe aucune différence géométrique, ou optionnellement dans laquelle il existe un nombre de similitudes supérieur à un seuil prédéterminé.

9. Procédé selon l'une des revendications précédentes, dans lequel l'étape de détection du point de préhension comprend l'étape de détection d'une surface pleine ou sans orifice, de préférence supérieure à une surface prédéterminée ou de préférence éloignée d'un orifice, d'un contour ou d'un bord du composant.

10. Procédé selon l'une des revendications précédentes, comprenant l'étape suivante :
- séparer ou segmenter (S2), dans l'image capturée, au moins une forme parmi une pluralité de formes, et optionnellement la pluralité de formes comprend au moins deux formes qui se chevauchent.

11. Procédé selon l'une des revendications précédentes, dans lequel, initialement, l'ensemble de formes préalablement validées et/ou l'ensemble de formes non validées est vide.

12. Procédé selon l'une des revendications précédentes, comprenant l'étape suivante :
- comparer la forme détectée à au moins une forme non validée d'un ensemble de formes non validées.

13. Robot, en particulier robot préhenseur, agencé pour mettre en œuvre le procédé selon l'une des revendications précédentes.

14. Robot selon la revendication précédente, comprenant :
- un bras robot, et
- une caméra ou un capteur optique.

15. Robot selon l'une des revendications 13 ou 14, comprenant en outre un système de dévracage ayant de préférence une trémie et/ou un bac vibrant et/ou un éclairage, en particulier un rétro-éclairage.

16. Composant d'horlogerie ou de joaillerie détectée avec le procédé selon l'une des revendications 1 à 12.
